# EUROPÄISCHE PATENTSCHRIFT

(11) **EP 2 158 527 B1**
(45) Veröffentlichungstag und Bekanntmachung des Hinweises auf die Patenterteilung: **17.07.2013**
(21) Anmeldenummer: 08758873.7
(22) Anmeldetag: 30.05.2008
(51) Int. Cl.: G05B 23/02

(54) **AKTIONSMODULE FÜR ZUSTANDSABHÄNGIGE WARTUNGSARBEITEN**
ACTION MODULES FOR STATUS-DEPENDENT MAINTENANCE WORK
MODULES D'ACTION POUR DES TRAVAUX DE MAINTENANCE EN FONCTION D'UN ÉTAT

(30) Priorität: 13.06.2007 DE 102007027262
(43) Veröffentlichungstag der Anmeldung: 03.03.2010
(73) Patentinhaber: Robert Bosch GmbH, 70469 Stuttgart (DE)
(72) Erfinder: BONEFELD, Ralf, 63739 Aschaffenburg (DE)
(74) Vertreter: Thürer, Andreas
(86) Internationale Anmeldenummer: PCT/EP2008/004297
(87) Internationale Veröffentlichungsnummer: WO 2008/151728

(56) Entgegenhaltungen:
- WO-A-2007/038300
- XIAO LIANG ET AL: "Intelligent Monitoring System Based on the Embedded Technology: A Case Study" NETWORKING, SENSING AND CONTROL, 2007 IEEE INTERNATIONAL CONFERENCE ON, IEEE, PI, 1. April 2007 (2007-04-01), Seiten 889-894, XP031178430 ISBN: 978-1-4244-1075-0
- DAN HONG ZHANG ET AL: "A reference architecture and functional model for monitoring and diagnosis of large automated systems" EMERGING TECHNOLOGIES AND FACTORY AUTOMATION, 2003. PROCEEDINGS. ETFA '03. IEEE CONFERENCE SEPT. 16-19, 2003, PISCATAWAY, NJ, USA,IEEE, Bd. 2, 16. September 2003 (2003-09-16), Seiten 516-523, XP010671028 ISBN: 978-0-7803-7937-4
- ZHANG D H ET AL: "Proactive health management for automated equipment: from diagnostics to prognostics" CONTROL, AUTOMATION, ROBOTICS AND VISION CONFERENCE, 2004. ICARCV 2004 8TH KUNMING, CHINA 6-9 DEC. 2004, PISCATAWAY, NJ, USA,IEEE, US, Bd. 1, 6. Dezember 2004 (2004-12-06), Seiten 479-484, XP010818079 ISBN: 978-0-7803-8653-2
- DJURDJANOVIC D ET AL: "Watchdog Agent-an infotronics-based prognostics approach for product performance degradation assessment and prediction" ADVANCED ENGINEERING INFORMATICS, ELSEVIER, Bd. 17, Nr. 3-4, 1. Juli 2003 (2003-07-01), Seiten 109-125, XP004595475 ISSN: 1474-0346
- JARDINE ET AL: "A review on machinery diagnostics and prognostics implementing condition-based maintenance" MECHANICAL SYSTEMS AND SIGNAL PROCESSING, LONDON, GB, Bd. 20, Nr. 7, 1. Oktober 2006 (2006-10-01), Seiten 1483-1510, XP005507568 ISSN: 0888-3270

## Beschreibung

Die Erfindung basiert auf der Realisierung eines konfigurierbaren Prozessüberwachungssystem für zustandsabhängige Wartungsarbeiten mit Aktionsmodulen gemäß dem unabhängigen Anspruch.

Derartige Überwachungssysteme sind unter dem Fachbegriff "Condition Monitoring" bekannt. Unter "Condition Monitoring" versteht man, dass beispielsweise mit einer Datenverarbeitungsanlage vernetzte Maschinen regelmäßig einer per dieser Datenverarbeitungsanlage durchgeführten Wartung unterzogen werden, zum Beispiel einer Schwingungsuntersuchung. An der Maschine montierte Messinstrumente liefern im einfachsten Fall einen Zahlenwert, der mit einem Tabellenwert verglichen wird und dann den aktuellen Zustand der Maschine unter zur Hilfenahme eines Bewertungsschemas in verschiedene Kategorien einsortiert. Beispielsweise die Kategorie: "Fataler Fehler" (zu hohe Schwingungen); "Abweichungen vom Idealwert" (tolerierbare Schwingungen), "keine Störung" (betriebsübliche Schwingungen). Schwingungen außerhalb der Toleranzgrenze bedeuten: erhöhten Verschleiß, kürzere Maschinenlaufzeiten, mehr Reparaturen, schlechte Produktqualität, erhöhter Energieverbrauch. Das Condition Monitoring System informiert somit die Maschinenbetreiber über bereits erforderliche oder demnächst erforderliche Wartungsarbeiten. Es handelt sich quasi um ein Frühwarnsystem.

XIAO LIANG ET AL: "Intelligent Monitoring System Based on the Embedded Technology: A Case Study" (2007-04-01), Seiten 889-894, XP031178430 ISBN: 978-1-4244-1075-0 befasst sich mit einem Überwachungssystem in der Verabeitungs- und Herstellungsindustrie. Erfasste Daten werden mit einer Signalverarbeitung analysiert und in einen lokalen Speicher geschrieben. Ansprechend auf eine Anfrage eines Steuerungszentrums werden die Daten zur Übertragung aus dem Speicher gelesen.

DAN HONG ZHANG ET AL: "A reference architecture and functional model for monitoringand diagnosis of large automated systems" (2003-09-16), Seiten 516-523, XP01 0671028 ISBN: 978-0-7803-7937-4 beschreibt eine Architektur zur Überwachung und Fehlerdiagnose von großer komplexer automatisierter Systeme in der Produktion und Logistik. Die Architektur ist aufgrund hierarchischer Strukturen leicht skalierbar. Probleme können schnell und nahe an ihrer Quelle behandelt werden wodurch der Datenverkehr minimiert werden kann.

ZHANG D H ET AL: "Proactive health management for automated equipment: from diagnostics to prognostics" (2004-12-06), Seiten 479-484, XP01 0818079 ISBN: 978-0-7803-8653-2 offenbart eine Vorgehensweise zur Vorhersage von Fehlerzuständen an automatisierten Maschinen.

WO 2007/038300 A beschreibt ein Verfahren zur Fehlererkennung bei dem Informationen einer Mehrzahl von Agenten für eine Mehrzahl von Sensoren gespeichert werden. Die Informationen werden mit Fehlerschwellen verglichen und es wird eine Aktion initialisiert, wenn eine der Fehlerschwellen überschritten wird.

DJURDJANOVIC D ET AL: "Watchdog Agent-an infotronics-based prognostics approach for product performance degradation assessment and prediction" (2003-07-01), Seiten 109-125, XP004595475 ISSN: 1474-0346 befasst sich mit einem Werkzeug für eine Beurteilung einer Mehrzahl von Sensoren und eine Vorhersage einer Maschinen- oder Prozessleistung.

Die Offenlegungsschrift DE 197 19 070 A1 zeigt ein Condition Monitoring System zur Überwachung von Zuständen mit einer Eingangseinheit mit mindestens einem Sensor zur Erfassung von nichtelektrischen Größen zur Umwandlung derselben in elektrische Größen, mindestens einer Auswerteeinheit zur Verarbeitung der aus der Eingangseinheit zugeleiteten Signale, einer Ausgangseinheit mit einer Anzeigeeinheit und einem Signalgeber zur Ausgabe der in der Auswerteeinheit verarbeiteten Signale, wobei die Auswerteeinheit mehrere Funktionseinheiten aufweist.

Die Aufgabe der Erfindung besteht nun darin ein Prozessüberwachungssystem bereitzustellen, welches derart realisiert ist, dass es anwendungsspezifisch leicht konfigurierbar ist und beispielsweise bei Änderungen an einer zu überwachenden Anlage schnell und preiswert an die neuen Gegebenheiten angepasst werden kann.

Die Erfindung löst diese Aufgabe mittels eines Prozessüberwachungssystems umfassend ein erstes Aktionsmodul, welches geeignet ist, eine ihm zugewiesene Aktion auszuführen, wobei ein Datenspeichermittel und ein Kommunikationsmittel umfasst sind, so dass das Aktionsmodul in der Lage ist Daten zu senden oder zu empfangen, wobei im Datenspeichermittel die Daten ablegbar sind, wobei von dem Aktionsmodul ein Aktionsmittel umfasst ist, welches abhängig von einem auftretenden Ereignis einen Zugriff auf im Datenspeichermittel abgelegte Daten bewirkt und diese Daten mittels des Kommunikationsmittels für andere Module des Prozessüberwachungssystems zugänglich macht.

Das Ereignis kann dabei ein beliebiges Ereignis sein, welches auf einer zeitlichen Grundlage basiert oder einer sonstigen messtechnisch erfassbaren Grundlage basiert. Das Ereignis wird in der Regel nach einem Soll-/Istvergleich ausgelöst in Form eines elektrischen, akustischen oder optischen Signals. Der Vorteil der Erfindung liegt in dem modularen Aufbau des Prozessüberwachungssystems. Jedes Aktionsmittel kann eine eigenständige, ihm zugewiesene Aktion ausführen und von anderen Aktionsmitteln oder sonstigen Systemkomponenten, wie Sensoren, Messwerterfassungen, Servern und Clients empfangene Daten individuell gemäß seiner individuellen Konfiguration verarbeiten und selbst wieder als Datenlieferant für weitere Aktionsmodule dienen. Alle Aktionsmodule sind strukturell im wesentlichen identisch realisiert und damit auch zueinander kompatibel. Die Aktionsmodule können sich jedoch in ihrer Funktion unterscheiden. Einmal entworfen kann das Aktionsmodul mehrfach reproduziert und jeweils mit unterschiedlichen Funktionen versehen werden, daher weisen die Aktionsmodule bevorzugt einen mittels Hard- und/oder Software realisierten identischen Aufbau auf. Die auf dem erfindungsgemäßen Konzept beruhenden Prozessüberwächungssysteme können somit sehr komplexe Anwendungsfälle abdecken und sind sehr flexibel und preiswert zu realisieren. Bevorzugt wird diese Flexibilität mittels eines aktionsspezifisch konfigurierbaren Rechenkerns oder Funktionskerns im Aktionsmodul realisiert, welcher auf das Datenspeichermittel und die Peripherie innerhalb des Aktionsmoduls Zugriff hat.

Vorzugsweise sind im Datenspeichermittel ein erster Datensatz als Rohdaten und ein zweiter Datensatz als Zwischendaten und optional weitere Daten als Modelldaten separat voneinander abgelegt, wobei das Aktionsmittel Zugriff auf das Datenspeichermittel und damit auf die Roh-, Zwischen- und Modelldaten hat. Dies hat den Vorteil, dass vom Aktionsmodul empfangene Daten (Rohdaten) separat von vom Aktionsmodul bearbeiteten Daten (Zwischendaten) innerhalb des Aktionsmoduls abgelegt werden können und somit die empfangenen Rohdaten stets zusätzlich zur Verfügung stehen. Das Aktionsmodul beziehungsweise der Rechenkem kann somit auf die Rohdaten zugreifen und innerhalb der Rohdaten nach der Ursache für ein ausgelöstes Ereignis suchen. Für Modellierungszwecke besteht zusätzlich Zugang zu den Modelldaten.

Weiter vorzugsweise umfasst jedes Aktionsmodul einen Timer, um sowohl die Rohdaten als auch bereits bearbeitete Daten im Datenspeichermittel mit einer Zeitbasis zu versehen. Hierdurch wird stets nachvollziehbar in welcher Reihenfolge die Daten empfangen wurden und es kann auch gegebenenfalls nachvollziehbar gemacht werden in welcher Reihenfolge die Daten bearbeitet wurden. Diese Zeitinformation könnte ebenfalls an andere Systemkomponenten zusammen mit den Daten übergeben werden.

Besonders bevorzugt umfasst jedes Aktionsmodul ein Signalanalysemittel zur Durchführung einer Signalanalyse, welche auf im Datenspeichermittel ablegbaren Daten basiert. Das Signalanalysemittel kann basierend auf der Art der im Datenspeichermittel abgelegten Daten eine Datenanalyse durchführen, beispielsweise eine FFT, um bestimmte Frequenzanteile bzw. das Frequenzspektrum aus einer Messdatenreihe herauszuarbeiten und um hieraus dann Rückschlüsse auf an einer zu überwachenden Maschine vorherrschende Vibrationen ziehen zu können. Jede andere aus dem Stand der Technik bekannte Signalanalyse könnte hier ebenfalls Anwendung finden, sofern es für den spezifischen Anwendungsfall sinnvoll ist. Der Fachmann ist in der Lage die Signalanalyse durch geeignete bekannte Verfahren zu realisieren. Das Ergebnis der Signalanalyse ist letztlich maßgebend für die Erzeugung des Ereignisses.

Ganz besonders bevorzugt umfasst jedes Aktionsmodul ein Triggermittel, um abhängig von dem Ereignis einen Zugriff auf Daten im Datenspeichermittel zu bewirken. Das bedeutet, dass im Falle eines Ereignisses das Aktionsmodul auf die Datenspeichermittel zugreift und beispielsweise die Rohdaten aus dem Datenspeichermittel ausliest, um sie an andere Systemkomponenten für weitere Bearbeitungszwecke weiterzugeben. Vorzugsweise wird abhängig von einem mittels der Signalanalyse erzeugten Ereignis mittels des Triggermittels das Triggersignal erzeugt, wobei die Signalanalyse vorzugsweise eine Hüllkurvenanalyse umfasst. Unter Hüllkurvenanalyse wird in diesem Fall eine Grenzwertüberwachung mit variablen Parametern verstanden, die eine höhere Aussagekraft hat als konstante Grenzwerte. Beispiel wäre die Überwachung der Abweichung einer Anlagentemperatur von der Umgebungstemperatur, die engere Grenzwerte und damit eine höhere Empfindlichkeit bei gleichzeitig höherer Störsicherheit als eine Überwachung der Absoluttemperatur aufweisen würde.

Am Aktionsmodul ist bevorzugt eine Schnittstelle zur Einspeisung eines von außerhalb des Aktionsmoduls auftretenden Ereignisses, insbesondere zur Weiterleitung an das Triggermittel, vorgesehen. Somit ist das Aktionsmodul in der Lage den Datenzugriff nicht nur basierend auf einem internen, mittels der Signalanalyse generierten Ereignisses, sondern auch basierend auf einem externen, außerhalb des Aktionsmoduls erzeugten, Ereignisses zu veranlassen. Zusätzlich ist eine Schnittstelle zur Weitergabe eines von innerhalb des Aktionsmoduls auftretenden Ereignisses an ein anderes Aktionsmodul oder eine Systemkomponente vorgesehen. Dies bedeutet, dass das betrachtete Aktionsmodul die Triggermittel anderer Aktionsmodule aktivieren kann.

Vorteilhafterweise ist ein Mittel zum Management und zur Koordination der Aktionsmodule untereinander vom Prozessüberwachungssystem umfasst. Dieses Mittel dient zur Verwaltung der Aktionsmodule und, sofern es sich um eine auf Software basierende Lösung handelt, auch zur Erzeugung dieser Module. Das Mittel zum Management wird in diesem Falle mittels eines Frameworks oder Rahmenprogramms realisiert, welches bei Start eines zugrundeliegenden Computerprogramms erzeugt wird.

Vorteilhafterweise umfasst das System bereits zumindest ein Mittel zur Messdatenerfassung, beispielsweise eine Sensorik zur Bestimmung der Stärke von Vibrationen. Die erfassten Messdaten können sowohl in digitaler als auch in analoger Form vorliegen und werden direkt oder indirekt mittels einer Systemkomponente an zumindest eines der Aktionsmodule weitergeleitet.

Für Wartungszwecke und zur Fehlersuche hat es sich bewährt, wenn zumindest ein Mittel zur Visualisierung der zwischen zwei Aktionsmodulen oder einem Aktionsmodul und einem anderen Systemmodul kommunizierten Daten vorsehbar ist. Damit lassen sich sowohl Zwischenwerte von vom Prozessüberwachungssystem verarbeiteten Daten für einen Benutzer geeignet darstellen, als auch Fehler innerhalb des Prozessüberwachungssystems leicht auffinden.

Ganz besonders bevorzugt ist das Prozessüberwachungssystem mittels einer Datenverarbeitungsanlage realisiert, welche auf einer vernetzten Client-Server-Architektur oder einer Nachrichtenarchitektur basiert. Die Aktionsmodule können dann mittels Softwareobjekten leicht und schnell reproduziert werden. Dies wird ganz besonders dann erreicht, wenn die interne Struktur eines Aktionsmoduls durch die Attribute und Methoden einer Klassendefinition im Sinne der OOP (objektorientierten Programmierung) innerhalb einer Klassenbibliothek definiert ist, wobei ein Aktionsmodul selbst als Instanz der Klasse während der Laufzeit eines auf der Datenverarbeitungsanlage ablaufenden Computerprogramms von diesem Computerprogramm erzeugt wird und das Computerprogramm miteinander kommunizierende Instanzen der Klasse umfasst, wobei vorzugsweise ein auf Software basierendes Rahmenwerk (Framework) vorgesehen ist, welches den Programmablauf koordiniert, verwaltet und die Objekte erzeugt.

Auch kann die Datenverarbeitungsanlage dazu genutzt werden, die Daten von an die Datenverarbeitungsanlage angeschlossenen Messdatenaufnehmem zu empfangen und an die Aktionsmodule zu verteilen beziehungsweise weiterzuleiten. Die Messwertaufnehmer umfassen in diesem Falle eine Datenschnittstelle, welche auf digitaler Basis Daten für die Datenverarbeitungsanlage bereithält.

Vorzugsweise wird jedes Aktionsmodul als Teilprozess der Datenverarbeitungsanlage realisiert. Dies fördert die Modularität und vereinfacht die Verteilung der Rechenleistung. Auch können die Teilprozesse auf einer oder verschiedenen Komponenten der Datenverarbeitungsanlage ablaufen, insbesondere auf Client- und/oder Serverkomponenten oder Komponenten von nachrichtenbasierenden Anlagen. Die Daten könnten hierbei mittels Broadcasting oder erst auf Anfrage im System verteilt werden. Beispielsweise wäre es möglich, dass die Antriebe eines Antriebssystems ihre Daten bereit halten und die Steuerung(en) im Antriebssystem diese Daten "abonnieren" beziehungsweise gezielt abfragen. Das System wird damit flexibel und leicht ausbaufähig, da in der Regel lediglich neue Komponenten mittels vorhandener Identifizierungsmitteln einmalig bei der Systeminbetriebnahme konfiguriert werden müssen.

Wird eine elektrische und/oder hydraulische Maschine oder Anlage, insbesondere eine Bearbeitungsvorrichtung, wie beispielsweise eine Werkzeugmaschine, mittels einer Prozessüberwachung nach einem der vorhergehenden Ansprüche überwacht, so können Fehlfunktionen frühzeitig erfasst und einem Ausfall oder vorzeitigen Verschleiß vorgebeugt werden. Besonders vorteilhaft wird das erfindungsgemäße System bei Verwendung zur Überwachung eines ganzen Maschinenparks. Mittels der Modularität und Flexibilität können beliebig komplexe Überwachungsprozeduren realisiert werden, die auf eine theoretisch beliebige Anzahl von Maschinen anwendbar sind. Insbesondere bei Erweiterungen des Maschinenparks kann das System mittels neuer Aktionsmodule an die veränderten Gegebenheiten angepasst werden. Besonders geeignet ist das erfindungsgemäße Prozessüberwachungssystem für die Überwachung bezüglich Temperatur, für Körperschallmessungen und Schwingungsanalysen an mechanischen Vorrichtungen, welche hydraulisch, elektrisch oder pneumatisch betrieben werden. Eine erhöhte Temperatur einer Hydraulikanlage könnte beispielsweise auf erhöhte Reibung und/oder Ölleckage zurückzuführen sein. Auch die Überwachung von Triebwerken auf Verschleiß wäre ein möglicher Anwendungsfall. Ähnliche Vorteile kommen auch bei Antriebssystemen und Automatisierungssystemen zum tragen, beispielsweise bei der Überwachung drehzahlabhängiger Schwingungen.

Weitere Ausgestaltungsformen der Erfindung sind den folgenden Figuren zu entnehmen. Es zeigen
Figur 1 zeigt beispielhaft den Prozessablauf innerhalb eines erfindungsgemäßen Prozessüberwachungssystems.
Figur 2 schematisch die Anbindung weiterer Aktionsmodule an ein vorhandenes Aktionsmodul.
Figur 3 den internen Aufbau eines Aktionsmoduls schematisch

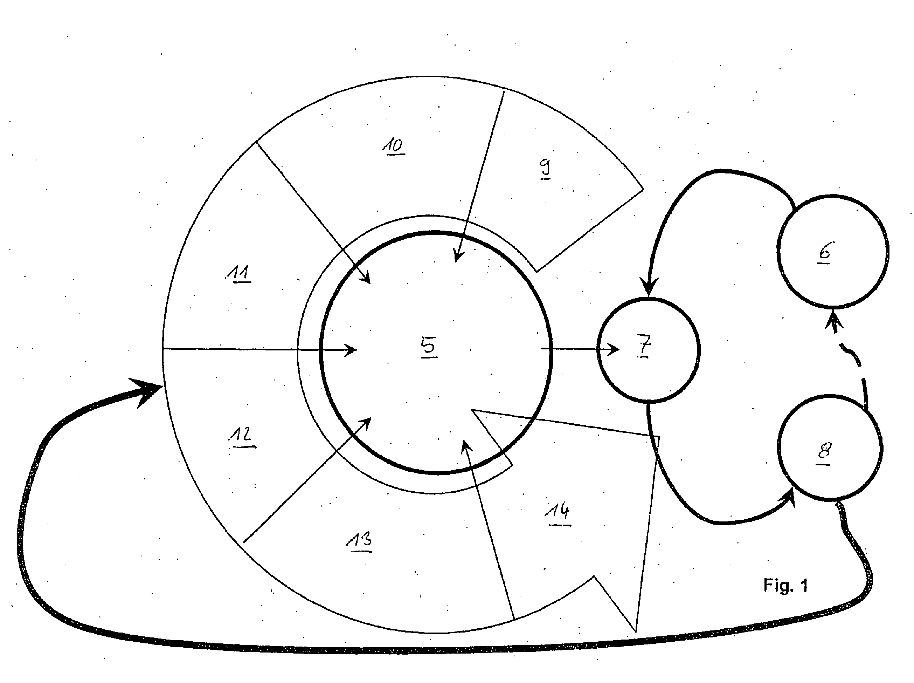

In Figur 1 ist der Prozessablauf zur Realisierung einer Maschinenüberwachung mittels sieben Stufen A-G dargestellt. Weiter sind eine Protokollinstanz 5 gezeigt und ein Ablaufschema 6,7,8 dargestellt. Es sei ausdrücklich darauf hingewiesen, dass sowohl die Anzahl der Stufen 9-14 als auch das Ablaufschema lediglich beispielhaft zu betrachten sind und aufgrund der Modularität der Erfindung nach Bedarf den örtlichen Gegebenheiten jederzeit angepasst, d.h. mit anderen Worten die Anzahl der Stufen variiert werden kann. Eine oder mehrere Stufen können mittels eines oder mehrerer erfindungsgemäßer Aktionsmodule 1,2,3 repräsentiert sein.

Die erste Stufe A (Messstufe) umfasst den eigentlichen Messvorgang als solchen. Hier wird mittels einer Messeinrichtung vor Ort an einer zu überwachenden Maschine der gegenwärtige Zustand der Maschine erfasst. Beispielsweise könnte hierbei ein Schwingungs- oder Geräuschsensor verwendet werden. Innerhalb der zweiten Stufe B (Merkmalsgewinnungsstufe) werden die Messdaten bearbeitet. Beispielsweise könnten mittels einer FFT (Fast Fourier Transformation) bestimmte dominante Frequenzen aus dem Frequenzspektrum herausgearbeitet werden. Innerhalb der dritten Stufe C (Merkmalsextraktion) werden die Ergebnisse einer Zahl oder einem Bereich zugeordnet, wobei dieser Zuordnung in der vierten Stufe D (Symptomerkennung) eine Relation zu den Bedeutungsunterschieden der Daten entlang einer untersuchten Dimension zugewiesen wird, so dass die Verhältnisse zwischen den Zahlen die Bedeutungsunterschiede entlang der Dimension widerspiegeln. Beispielsweise würden bestimmten Amplitudenwerten (Dimension "Amplitude") der aus dem Frequenzspektrum mittels der FFT gewonnenen Spektralanteile Zahlenbereichen zugeordnet, welche dann eine für die weitere Auswertung erforderliche Bedeutung haben (z.B. "kein Handlungsbedarf", "Toleranzbereich nicht überschritten", "Handlungsbedarf"). Die fünfte Stufe E (Symptomklassifizierung) führt dann die tatsächliche Klassifizierung der in der vorherigen Stufe D vorgenommenen Quantifizierung durch, d.h. sie ordnet die von der Stufe D erhaltenen Daten den Quantifizierungsstufen zu und aktiviert die sechste Stufe F (Prognostik), welche den weiteren zeitlichen Verlauf des Maschinenzustands prognostiziert. Letztlich wird in der siebten Stufe G die Aktivierung von Maßnahmen veranlasst. Der Pfeil in Figur 1 deutet den durch die Stufen A bis G beziehungsweise je nach Realisierung der Stufen durch miteinander verschaltete Aktionsmodule 1, 2 und 3 geführten Datenfluss an. Ein Aktionsmodul 1,2 und 3 könnte alle oder einzelne Stufen repräsentieren. Alle Stufen haben vorzugsweise einen Zugriff auf eine Logbuchfunktion 5, in dem die Prozessschritte dokumentiert werden.

Das erfindungsgemäße System kennt mehrere Betriebsarten. Eine erste Betriebsart ist der sogenannte Betriebsmodus. Hier vergleicht das System anfallende Messdaten gegen Referenzdaten, die zum einen einen Symptom-Schaden-Zusammenhang herstellen und zum anderen einen Belastung-Schaden-Zusammenhang herstellen, der als Basis für die Schadensprognostik dient (Hinweis auf mögliche Betriebsstörungen in naher Zukunft). Die Stufen "Symptomerkennung", "Symptomklassifizierung" und "Prognostik" greifen damit implizit auf Schadens- oder Versagensmodelle zurück. Der Stufe "Merkmalsextraktion" liegt die qualitative Struktur des Symptom-Schaden-Modells zugrunde. Im Idealfall dienen Daten aus dem Prozess, die im Protokollblock und Logbuch 5 abgelegt werden, als Grundlage für die Modellierung 8 von Schaden- bzw. Versagensverläufen im allgemeinen und zur Definition von "Gut-Zuständen" in komplexeren Systemen, die nicht a-priori angegeben werden können. Die Modellbildung 8 erfolgt im Regelfall als Abfolge iterativer Schritte, welche in der Reihenfolge "Merkmalsauswahl" 6 (z.B. " Körperschall an der Stelle X"), Auswertung 7 der gewonnenen Daten (z.B. " Frequenzspektrum nach 5000 Betriebsstunden") und Modellbildung 8 (z.B. "Schadensbild bei Frequenzspektrum Y", "Nachziehen von Schwellwerten"). Die Erfahrungen aus letzterem Schritt können zu einer verbesserten Merkmalsauswahl führen ("z.B. Körperschall besser an Stelle Z messen"). Diese iterative Vorgehensweise kennzeichnet den sogenannten Parametriermodus des Systems, welcher üblicherweise (aber nicht notwendigerweise) nicht vollautomatisch ausgeführt wird und eine weitere Betriebsart darstellt.

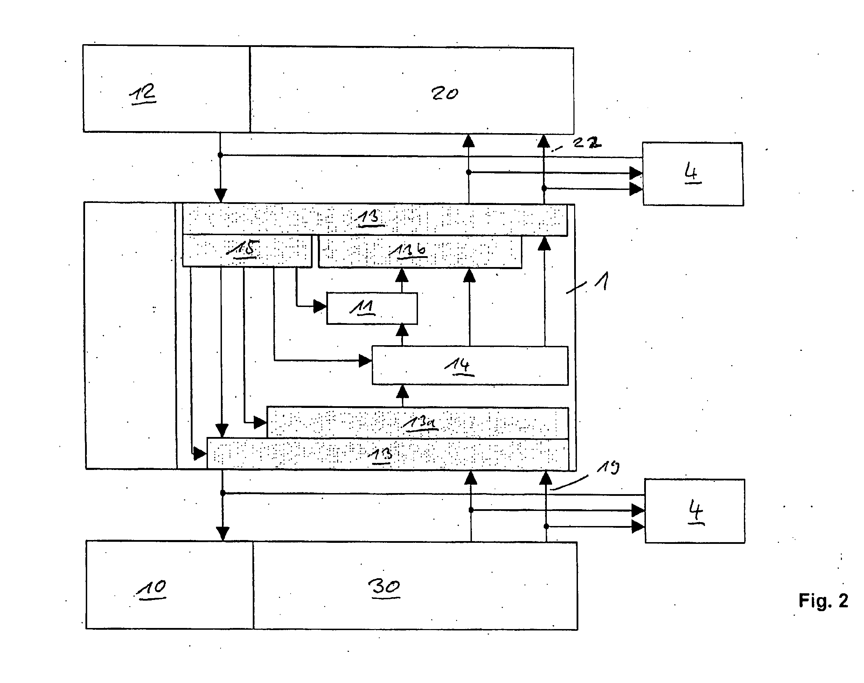

Figur 2 zeigt als Blockschaltbild schematisch und beispielhaft eine mögliche Realisierung der Prozessschritte von der Messdatensammlung 10 mittels einer Serveranwendung 30 über die Messdatenbearbeitungsstufe mittels eines erfindungsgemäßen Aktionsmoduls 1 bis hin zur Messdatenquantifizierung 12 mittels einer Hostanwendung 20. Der Begriff Server bezeichnet dabei eine Hardware und/oder Software, welche einem mit ihm verbundenen Client Zugang zu speziellen Diensten verschafft. Unter dem Begriff Host wird hier ein Rechner mit Software verstanden, welcher in beide Richtungen mit einem anderen Computer (z.B. dem Server) kommunizieren kann. Das Aktionsmodul 1 wird in Verbindung mit Figurenbeschreibung 3 noch detaillierter erläutert werden, daher wird hier kurz auf die prinzipielle Funktionsweise und das Zusammenspiel mit den Systemkomponenten Host 20, Server 30 und GUI (grafische Benutzerschnittstelle) 4 eingegangen. Die Serveranwendung 30 liefert nach der Datensammlung, beispielsweise von einem Messwertaufnehmer, die Daten mittels der Kommunikationsschnittstelle 13 des Aktionsmoduls 1 an das Aktionsmodul 1. Die Aktivierung der Stufe 10, welche auf dem Server 30 abläuft, kann mittels der Stufe 12 über das Aktionsmodul 1 erfolgen. Aus diesem Grunde sind zwischen Aktionsmodul 1 und Server 30 beziehungsweise Stufe 10 und Aktionsmodul 1 Pfeile in beide Richtungen eingezeichnet. Es kann demnach eine Kommunikation in beide Richtungen erfolgen. Gleichens gilt für die Kommunikation zwischen Hostanwendung 20 beziehungsweise Stufe 12 und dem Aktionsmodul 1 (siehe Pfeile). Der Datenverkehr zwischen Stufe 12 beziehungsweise Host 20 und Aktionsmodul 1 kann ebenso wie der Datenverkehr zwischen Stufe 10 beziehungsweise Server 30 in beiden Richtungen mittels des Visualisierungsmittels 4 sichtbar gemacht werden und/oder aufgezeichnet werden. Dies kann sowohl zu Kontroll- als auch zu Debugzwecken dienen. Für die Kommunikation ist das Aktionsmodul 1 in diesem Beispiel neben einem Kommunikationsmittel 13 mit einer Serverfunktion 13b und einer Clientfunktion 13a ausgestatten, d.h. empfangsseitig fungiert das Aktionsmodul als Client 13a und sendeseitig als Server 13b. Ebenso sind ein Datenspeichermittel 11 und ein Datenverarbeitungsmittel 14 vorgesehen. Datenverarbeitungsmittel 14, Datenspeichermittel 11 und Kommunikationsmittel 13,13a,13b sind miteinander derart verbunden, dass Daten zwischen diesen Komponenten ausgetauscht werden können. Der Datenaustausch kann sowohl uni- als auch bidirektional je nach Verwendungszweck realisiert werden (Die in Figur 2 dargestellten unidirektionalen Verbindungen mittels eines einzigen Pfeils stellen nur eine mögliche Variante der Erfindung dar). Das Datenverarbeitungsmittel 14 ist zusätzlich in der Lage ein Ereignis an einem Ausgang 22 des Aktionsmoduls 1 zu generieren, welches extern weiterverarbeitet werden kann. Zusätzlich ist ein Konfigurationsmittel 15 vorgesehen, welches mit allen Aktionsmodulkomponenten 11,13,13a,13b,14,15 verbunden ist und zur Konfiguration dieser Komponenten geeignet ist.

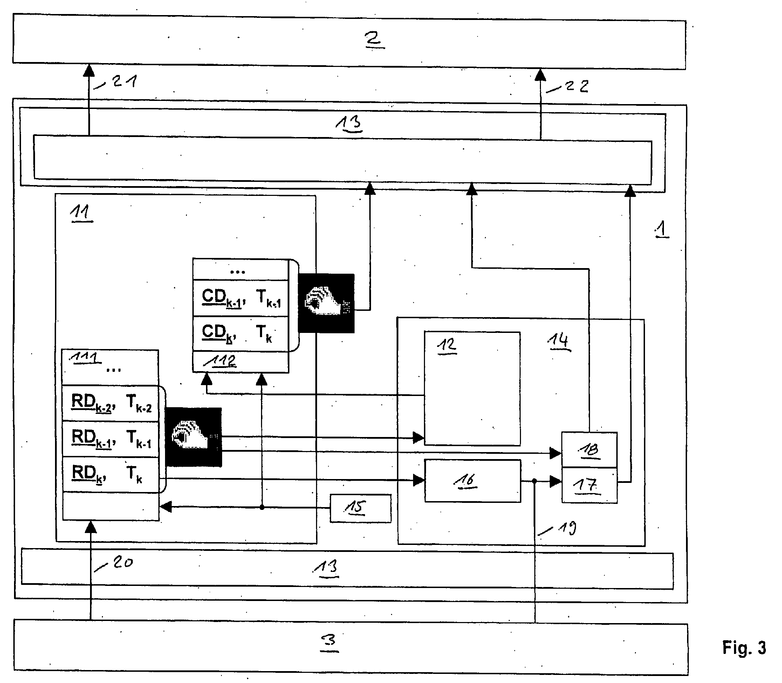

In Figur 3 ist dargestellt, das Aktionsmodul 1 mit Datenspeichermittel 11 (Rohdaten 111 und Zwischendaten 112 und Modelldaten 113), Funktions- und/oder Rechenkem 12, Kommunikationsmittel 13, Datenverarbeitungsmittel 14, Timer 15, Signalanalysemittel 16 , Triggermittel 17, Mittel 18 zur Aufbereitung eines Oszillogrammes, Dateneingang 19 für externe Ereignisse, Dateneingang 20 für Nutzdaten und ein Datenausgang 21 für Nutzdaten, Datenausgang 22 zur Mitteilung eines internen Ereignisses oder Weiterleitung eines externen Ereignisses an andere Aktionsmodule an deren Dateneingang 19.

Das Aktionsmodul 1 kann sogenannte Rohdaten 111 mittels des Kommunikationsmittels 13 von externen Modulen 2 und 3 entgegennehmen und diese im Datenspeichermittel 11 ablegen. Unter externen Modulen werden Systemmodule wie Server, Client, Sensoren, usw. und natürlich erfindungsgemäße Aktionsmodule 2 und 3 verstanden. Das Datenspeichermittel 11 ist so ausgelegt, dass die Daten 111,112,113 unverändert bis zu einem durch die Größe des Speichers vorgebbaren Limit abspeicherbar sind. Das Datenspeichermittel umfasst mindestens einen ersten Speicherbereich 111 für die Rohdaten und einen zweiten Speicherbereich 112 für weitere Datensätze sowie einen dritten Speicherbereich 113 für Modelldaten. Die Speicher arbeiten vorzugsweise nach dem FIFO - Prinzip (First in First out), können jedoch auch anders organisiert sein. Bei den weiteren Datensätzen 112 kann es sich um Rohdaten 111 handeln, welche vom Aktionsmittel 1 bereits nach bestimmten Kriterien bearbeitet und gegebenenfalls zusammengefasst wurden. In der Regel werden diese Daten zwar quantitativ geringer als die Rohdatensätze ausfallen, ihr Informationsgehalt wird jedoch höher sein. Unter Rohdaten versteht man hierbei die von einem Aktionsmodul 1,2 und 3 empfangenen, unbearbeiteten, Daten welche derart noch vom Aktionsmodul 1,2 und 3 bearbeitet werden müssen, dass die Datenquantität abnimmt, jedoch die Datenqualität hinsichtlich der qualitativen Aussage der Daten zunimmt. Im Standardbetriebsfall nimmt mit jedem Aktionsschritt die Frequenz der anfallenden Daten, und damit die Anzahl der Daten ab, während der qualitative Gehalt in Bezug auf ihre Relevanz für Wartungsmaßnahmen zunimmt. Ziel des übergeordneten Gesamtsystems, welches sich aus Aktionsmodulen 1,2 und 3 zusammensetzt, ist die Transformation von z.B. Körperschalldaten in einfache Aussagen wie "Bestelle Ersatzteil sofort und plane Austausch für Zeitpunkt innerhalb der nächsten 2 Wochen". Bei den Modelldaten handelt es sich um Datensätze, welche im Rahmen der Modellierung von Schadensmodellen Verwendung finden. Rechts in Figur 3 neben dem Datenspeichermittel 11 ist das Datenverarbeitungsmittel 14 gezeigt. Das Datenverarbeitungsmittel 14 umfasst in diesem konkreten Beispiel einen Funktionskern- bzw. Rechenkern 12, Signalanalysemittel 16, Triggermittel 17 und Mittel 18 zur Aufbereitung eines Oszillogrammes. Dieser Aufbau ist nicht zwingend und könnte bezüglich nicht unbedingt erforderlicher Komponenten (z.B. Timer in monolithischen zyklischen Systemen, in denen in der Datenabfolge die Zeit implizit enthalten ist.) reduziert oder um weitere Komponenten (z.B. Eventlogger mit remanenter Speicherung in Form eines Logbuches) erweitert werden.

Zwischen dem Datenverarbeitungsmittel 14 und dem Datenspeichermittel 11 ist der Timer 15 eingezeichnet. Der Timer 15 könnte sowohl Teil des Datenverarbeitungsmittels 14 als auch als separate Einheit in Hard-/oder Software innerhalb des Aktionsmoduls 1 realisiert sein. Die bisher erwähnten Komponenten werden ergänzt durch das Kommunikationsmittel 13, welches dem Aktionsmodul 1 erlauben mit seinem Umfeld in Kontakt zu treten und Daten von anderen Aktionsmodulen 2 oder 3 zu empfangen oder Daten an diese zu versenden. Das Kommunikationssystem kann drahtgebunden, beispielsweise als Datenbus oder drahtlos realisiert sein. Der Datenempfang durch das Aktionsmodul kann mit Hilfe des Kommunikationsmittels 13 empfangsseitig mittels periodischer Abfragen (Polling) erfolgen oder ereignisbasiert beispielsweise mittels Interrupts erfolgen. Auch kann das Aktionsmodul 1 als "Subscriber" eines Datenkanals fungieren und mittelbar mit einem "Publisher" unter Verwendung eines "Brokers" kommunizieren. Das Aktionsmodul 1 könnte, als Client konfiguriert, auch Daten von einem Server beziehen. Der "Broker" dient dabei als Datenkanalvermittler und der "Subscriber" meldet sich beim "Broker" für einen bestimmten Datenkanal an, welcher vom "Publisher" bedient wird. Das Kommunikationsmittel 11 des Aktionsmoduls 1 ist daher empfangsseitig entweder für alle zuvor genannten Datenübermittlungsprinzipien bereits vorbereitet, so dass es nur noch entsprechend konfiguriert werden muss, oder es ist speziell für ein ganz bestimmtes Prinzip realisiert. Sendeseitig gilt dasselbe sinngemäß. Somit kann das Aktionsmodul ebenfalls wahlweise auf verschiedene Dienste angepasst werden, um Kompatibilität mit anderen Kommunikationsmittels des Systems herzustellen. Sendeseitig kann das Kommunikationsmittel 13 als Server oder als "Publisher" konfiguriert werden, wobei sowohl das Multicast- als auch Broadcastprinzip unterstützt werden kann. Vorzugsweise wird ein "Broker" vorgesehen, welcher mehrere Informationskanäle verwaltet. Der "Broker" könnte beispielsweise unmittelbar vom Datenverarbeitungsmittel 13 als auch mittels direkter Zugriffsmöglichkeit auf das Datenspeichermittel 14 mit Daten versorgt werden, welche er wahlweise oder gemeinsam mittels des Kommunikationsmittels 13 sendet. Senderseitig wird auch die eventbasierte Kommunikation unterstützt, das bedeutet, dass das Aktionsmodul1 die Eingänge für externe Ereignisse von anderen Aktionsmodulen 2,3,4 bedienen kann. Der Empfang und das Senden von Ereignissen kann ebenso wie der Empfang und das Senden von Daten mittels der zuvor genannten Nachrichtenübertragungsprinzipien erfolgen. Außerdem können alle weiteren im Stand der Technik bekannten Datenübertragungsprinzipien, die hier nicht explizit genannt sind, aber dem Fachmann zum Anmeldezeitpunkt bekannt sind, Verwendung finden.

Das Datenverarbeitungsmittel 14 beziehungsweise der Rechenkern/Funktionskem 12 hat Lese- und/oder Schreibzugriff sowohl auf die Rohdaten 111 im Datenspeichermittel 11 als auch auf die anderen Speicherbereiche 112 und 113. Somit ist das Datenverarbeitungsmittel 14 in der Lage die Rohdaten 111 zu verarbeiten und das Ergebnis dann im Speichermittel 11 als Zwischendaten 112 wieder abzulegen. Für Modellierungszwecke hat das Datenverarbeitungsmittel 14 ebenfalls Schreib- und/oder Lesezugriff auf den Modellierungsdatenspeicher 113. Der Timer 15 dient dazu, die Daten mit Zeitstempeln zu versehen, so dass die zeitliche Reihenfolge des Datenempfangs protokollierbar ist. Dies gilt für alle Daten, welche im Datenspeichermittel 11 abgelegt sind. Das Signalanalysemittel hat ebenfalls zumindest Lesezugriff auf die im Datenspeichermittel 11 abgelegten Daten 111,112,113. Dieser Zugriff dient dazu, dass das die Daten 111,112,113 vom Signalanalysemittel 16 zum Zwecke der Datenanalyse eingelesen werden können und im konkreten Fall beispielsweise einer Hüllkurvenanalyse unterzogen werden können. Das Mittel 18 zur Aufbereitung eines Oszillogrammes kann ebenso wie das Signalanalysemittel 16 im Datenverarbeitungsmittel 11 abgelegte Daten (Rohdaten 111,bearbeitete Daten 112, Modellierungsdaten für Schadensmodelle 113) einlesen, um eine Momentaufnahme zu generieren, die zu einem bestimmten Zeitpunkt für das System zu Analysezwecken relevant werden kann. Dieser Zeitpunkt wird vom Signalanalysemittel 16 aufgrund der Analyse erkannt und mittels des Triggermittels 17 an das Mittel 18 zur Aufbereitung eines Oszillogramms kommuniziert. Der Zeitpunkt wird als Event zur Erstellung der Momentanaufnahme herangezogen, wobei diese Momentaufnahme mittels des Triggermittels 17 und der bereits beschriebenen Komponenten (16,18) realisiert wird. Die Momentaufnahme ist nichts anderes als ein Datenblock im Datenverarbeitungsmittel 11, welcher dann als Ganzes zum Kommunikationsmittel 13 und/oder den "Broker" weitergegeben wird, so dass andere Aktionsmodule 2,3,4 oder Systemmodule sowohl über den dem Zeitpunkt des Ereignisses, als auch über den dem Ereignis zugrundeliegenden Datensatz 111, 112 und 113 informiert werden. Der Zugriff der Signalanalyse 16 und des Rechenkerns/Funktionskerns 12 auf die Modelldaten 113 ermöglicht es bei der Signalanalyse und der Festlegung von Triggerschwellen die Modellierung mit einzubeziehen. Somit kann das Modell bei der Zuordnung von Symptomen und der Prognose künftiger Schadensverläufe mit berücksichtigt werden. Bei dem Modell handelt es sich um ein Schadensmodell, welches sehr komplex aber auch sehr einfach gehalten werden kann.

Selbstverständlich können alle Komponenten 12,16,17,18 des Datenverarbeitungsmittels 14 mittels eines einzigen Rechenkerns/Funktionskerns 12 oder mittels mehrerer Rechenkerne/Funktionskerne 12 realisiert sein. Die Darstellung in Figur 3 ist nur schematisch zu betrachten.

## Patentansprüche

1. Prozessüberwachungssystem umfassend ein erstes Aktionsmodul (1,2,3), welches geeignet ist eine ihm zugewiesene Aktion auszuführen, wobei das Aktionsmodul (1,2,3) ein Datenspeichermittel (11) und ein Kommunikationsmittel (13) umfasst, so dass es in der Lage ist Daten zu senden oder zu empfangen, wobei im Datenspeichermittel (11) Daten ablegbar sind, wobei ein Aktionsmittel (14) umfasst ist, wobei das Aktionsmodul ausgebildet ist, um von zumindest einem Mittel zur Messdatenerfassung direkt oder indirekt weitergeleitete Rohdaten (111) mittels des Kommunikationsmittels zu empfangen und im Datenspeichermittel als abgelegte Daten abzulegen, das Aktionsmittel (14) ausgebildet ist, um die Rohdaten in Zwischendaten (112) zu verarbeiten und im Datenspeichermittel zusätzlich als abgelegte Daten abzulegen, so dass die Rohdaten stets zusätzlich zu den Zwischendaten zur Verfügung stehen, das Aktionsmodul einen Timer (15) umfasst, um die Rohdaten und die Zwischendaten mit Zeitstempeln zu versehen, so dass die zeitliche Reihenfolge des Datenempfangs protokollierbar ist, das Aktionsmittel (14) ein Signalanalysemittel (16) zur Durchführung einer Signalanalyse umfasst, welche auf in dem Datenspeichermittel abgelegten Daten basiert und eine Grenzwertüberwachung mit variablen Parametern umfasst, und wobei mittels der Signalanalyse ein Ereignis erzeugt wird, wobei das Aktionsmittel (14) ein Triggermittel (17), das Signalanalysemittel (16) und ein Mittel (18) zur Aufbereitung eines Oszillogrammes umfasst, die abhängig von dem auftretenden Ereignis einen Zugriff auf einen dem Ereignis zugrundeliegenden Datensatz aus im Datenspeichermittel (11) abgelegten Daten bewirken und diesen Datensatz mittels des Kommunikationsmittels (13) für andere Komponenten (1,2,3,4,10,12,20,30) des Prozessüberwachungssystems zugänglich machen, so dass die anderen Komponenten sowohl über den Zeitpunkt des Ereignisses, als auch über den dem Ereignis zugrundeliegenden Datensatz informiert werden.

2. System nach Anspruch 1, wobei im Datenspeichermittel (11) ein erster Datensatz (111) als Rohdaten und/oder ein vom Aktionsmodul (1,2,3) bearbeiteter zweiter Datensatz (112) als Zwischendaten und/oder Modelldaten für Modellierungszwecke abgelegt sind, wobei das Aktionsmittel (14) Zugriff auf das Datenspeichermittel (11) hat.

3. System nach einem der vorhergehenden Ansprüche, wobei das erste und weitere Aktionsmodule (1,2,3) einen mittels Hard- und/oder Software realisierten identischen Aufbau aufweisen.

4. System nach einem der vorhergehenden Ansprüche, wobei innerhalb des Aktionsmoduls (1,2,3) abhängig von dem Ergebnis der Signalanalyse mittels des Triggermittels (17) ein Triggersignal erzeugt wird.

5. System nach einem der vorhergehenden Ansprüche, wobei die Signalanalyse eine Hüllkurvenanalyse umfasst.

6. System nach einem der vorhergehenden Ansprüche, wobei eine Schnittstelle (19) zur Einspeisung eines von außerhalb des Aktionsmoduls (1,2,3), auftretenden Ereignisses in das Aktionsmodul (1,2,3), insbesondere zum Triggermittel (17) nach einem der vorhergehenden Ansprüche, vorgesehen ist.

7. System nach einem der vorhergehenden Ansprüche, wobei eine Schnittstelle zur Ausgabe eines von innerhalb des Aktionsmoduls (1,2,3), auftretenden Ereignisses, insbesondere eines von dem Triggermittel (17) nach einem der vorhergehenden Ansprüche erzeugten Ereignisses, vorgesehen ist.

8. System nach einem der vorhergehenden Ansprüche, wobei das Aktionsmittel (1,2,3) einen aktionsspezifisch konfigurierbaren Funktionskem (12) umfasst, welcher auf das Datenspeichermittel (11) Zugriff hat.

9. System nach einem der vorhergehenden Ansprüche, wobei ein Mittel zum Management und zur Koordination mehrerer Aktionsmodule (1,2,3) untereinander umfasst ist.

10. System nach einem der vorhergehenden Ansprüche, wobei zumindest ein Mittel (4) zur Visualisierung der zwischen zumindest zwei Aktionsmodulen (1,2,3) oder einem Aktionsmodul (1,2,3) und einer weiteren Systemkomponente (4,10,12,20,30) kommunizierten Daten vorgesehen ist.

11. System nach einem der vorhergehenden Ansprüche, wobei das Prozessüberwachungssystem mittels einer Datenverarbeitungsanlage realisiert ist und diese insbesondere mittels einer vernetzten Client-Server-Architektur oder einer nachrichten basierenden Architektur arbeitet.

12. System nach Anspruch 11, wobei die interne Struktur des Aktionsmoduls (1,2,3) und die Funktion durch die Attribute und Methoden einer Klassendefinition im Sinne der OOP definiert ist, wobei ein Aktionsmodul (1,2,3) selbst als Instanz der Klasse während der Laufzeit eines auf der Datenverarbeitungsanlage ablaufenden Computerprogramms von diesem Computerprogramm erzeugt wird.

13. System nach Anspruch 12, wobei das Computerprogramm miteinander kommunizierende Instanzen der Klasse umfasst.

14. System nach Anspruch 13, wobei ein auf Software basierendes Rahmenwerk vorgesehen ist, welches den Programmablauf koordiniert.

15. System nach einem der Ansprüche 11 bis 14, wobei das Aktionsmodul (1,2,3) Messdaten von an die Datenverarbeitungsanlage angeschlossenen Messdatenaufnehmern empfängt.

16. System nach einem der Ansprüche 11 bis 15, wobei ein Aktionsmodul (1,2,3) als Teilprozess der Datenverarbeitungsanlage realisiert ist.

17. System nach Anspruch 16, wobei die Teilprozesse auf einer oder verschiedenen Komponenten der Datenverarbeitungsanlage ablaufen.

18. Hydraulische Anlage oder Maschine mit einem Prozessüberwachungssystem nach einem der vorhergehenden Ansprüche.

19. Elektrische Anlage oder Maschine, insbesondere Antriebssystem oder Automatisierungssystem, mit einem Prozessüberwachungssystem nach einem der Ansprüche 1 bis 18.

20. Anlage oder Maschine nach einem der Ansprüche 18 oder 19, wobei die Prozessüberwachung zumindest teilweise als Temperatur- und/oder Körperschall- und/oder Schwingungsüberwachung realisiert ist.

21. Maschinenpark mit Anlagen oder Maschinen nach einem der vorhergehenden Ansprüche 18 bis 20.

## Claims

1. Process monitoring system comprising a first action module (1, 2, 3) which is suitable for carrying out an action allocated to it, the action module (1, 2, 3) comprising a data storage means (11) and a communication means (13), with the result that it is able to transmit or receive data, the data storage means (11) being able to store data, an action means (14) being included, the action module being designed to receive raw data (111) directly or indirectly forwarded by at least one measurement data acquisition means using the communication means and to store said data in the data storage means in the form of stored data, the action means (14) being designed to process the raw data into intermediate data (112) and to additionally store said data in the data storage means in the form of stored data, with the result that the raw data are always available in addition to the intermediate data, the action module comprising a timer (15) in order to provide the raw data and the intermediate data with time stamps, with the result that the chronological order in which data are received can be recorded, the action means (14) comprising a signal analysis means (16) for carrying out signal analysis which is based on data stored in the data storage means and comprises limit value monitoring with variable parameters, and the signal analysis being used to produce an event, the action means (14) comprising a trigger means (17), the signal analysis means (16) and a means (18) for preprocessing an oscillogram, which, on the basis of the event which occurs, access a data record on which the event is based and which comprises data stored in the data storage means (11) and make this data record accessible to other components (1, 2, 3, 4, 10, 12, 20, 30) of the process monitoring system using the communication means (13), with the result that the other components are informed both of the time of the event and of the data record on which the event is based.

2. System according to Claim 1, a first data record (111) being stored in the data storage means (11) in the form of raw data and/or a second data record (112) which is processed by the action module (1, 2, 3) being stored in the data storage means (11) in the form of intermediate data and/or model data for modelling purposes, the action means (14) having access to the data storage means (11).

3. System according to one of the preceding claims, the first and further action modules (1, 2, 3) having an identical structure implemented using hardware and/or software.

4. System according to one of the preceding claims, a trigger signal being produced inside the action module (1, 2, 3) using the trigger means (17) on the basis of the signal analysis result.

5. System according to one of the preceding claims, the signal analysis comprising an envelope curve analysis.

6. System according to one of the preceding claims, an interface (19) for feeding an event, which occurs outside the action module (1, 2, 3), into the action module (1, 2, 3), in particular to the trigger means (17) according to one of the preceding claims, being provided.

7. System according to one of the preceding claims, an interface for outputting an event which occurs inside the action module (1, 2, 3), in particular an event produced by the trigger means (17) according to one of the preceding claims, being provided.

8. System according to one of the preceding claims, the action means (1, 2, 3) comprising a functional core (12) which can be configured in an action-specific manner and has access to the data storage means (11).

9. System according to one of the preceding claims, a means for managing and coordinating a plurality of action modules (1, 2, 3) being included.

10. System according to one of the preceding claims, at least one means (4) for visualizing the data communicated between at least two action modules (1, 2, 3) or between an action module (1, 2, 3) and a further system component (4, 10, 12, 20, 30) being provided.

11. System according to one of the preceding claims, the process monitoring system being implemented using a data processing system and the latter operating, in particular, using a networked client/server architecture or a message-based architecture.

12. System according to Claim 11, the internal structure of the action module (1, 2, 3) and the function being defined by the attributes and methods of a class definition in the sense of OOP, an action module (1, 2, 3) itself being produced, as an entity of the class during the run time of a computer program running on the data processing system, by said computer program.

13. System according to Claim 12, the computer program comprising entities of the class which communicate with one another.

14. System according to Claim 13, a framework which is based on software and coordinates the program sequence being provided.

15. System according to one of Claims 11 to 14, the action module (1, 2, 3) receiving measurement data from measurement data sensors connected to the data processing system.

16. System according to one of Claims 11 to 15, an action module (1, 2, 3) being implemented as a subprocess of the data processing system.

17. System according to Claim 16, the subprocesses running on one component or different components of the data processing system.

18. Hydraulic installation or machine having a process monitoring system according to one of the preceding claims.

19. Electrical installation or machine, in particular a drive system or automation system, having a process monitoring system according to one of Claims 1 to 18.

20. Installation or machine according to either of Claims 18 and 19, the process monitoring being at least partially implemented in the form of temperature and/or structure-borne noise and/or vibration monitoring.

21. Machine park having installations or machines according to one of the preceding Claims 18 to 20.

## Revendications

1. Système de surveillance de processus comprenant un premier module d'action (1, 2, 3) apte à exécuter une action qui lui est assignée, dans lequel le module d'action (1, 2, 3) comprend un moyen de stockage de données (11) et un moyen de communication (13) de manière à ce qu'il soit capable d'émettre ou de recevoir des données, des données pouvant être stockées dans le moyen de stockage de données (11), dans lequel il est prévu un moyen d'action (14), lequel moyen d'action est conçu pour recevoir à l'aide du moyen de communication des données brutes (111) directement ou indirectement retransmises en provenance d'au moins un moyen d'acquisition de données de mesure et pour stocker des données en tant que données stockées dans le moyen de stockage de données, dans lequel le moyen d'action (14) est conçu pour transformer les données brutes en données intermédiaires (112) et pour les stocker en outre en tant que données stockées dans le moyen de stockage de données de manière à ce que les données brutes soient toujours disponibles en plus des données intermédiaires, le module d'action comprend une temporisation (15) afin de doter les données brutes et les données intermédiaires de marqueurs temporels, de manière à ce que l'ordre temporel de réception de données puisse être enregistré, le moyen d'action (14) comprend un moyen d'analyse de signaux (16) destiné à effectuer une analyse de signaux qui est basée sur des données stockées dans le moyen de stockage de données et comprend une surveillance de valeurs limites à paramètres variables, et dans lequel un événement est généré au moyen de l'analyse de signaux, dans lequel le moyen d'action (14) comprend un moyen de déclenchement (17), le moyen d'analyse de signaux (16) et un moyen (18) de préparation d'oscillogramme, lesquels moyens provoquent, en fonction de l'événement s'étant produit, un accès à un ensemble de données parmi les données stockées dans le moyen de stockage de données (11), lequel ensemble est sous-jacent à l'événement, et rendent accessible cet ensemble de données à l'aide du moyen de communication (13) à d'autres composants (1, 2, 3, 4, 10, 12, 20, 30) du système de surveillance de processus, de manière à ce que les autres composants soient informés de l'instant où se produit l'événement ainsi que de l'ensemble de données sous-jacent à l'événement.

2. Système selon la revendication 1, dans lequel un premier ensemble de données (111), en tant que données brutes, et/ou un second ensemble de données (112) traité par le module d'action (1, 2, 3) en tant que données intermédiaires et/ou des données de modèles destinées à la modélisation sont stockés dans le moyen de stockage de données (11), dans lequel le moyen d'action (14) a accès au moyen de stockage de données (11).

3. Système selon l'une quelconque des revendications précédentes, dans lequel le premier module d'action et les modules d'action supplémentaires (1, 2, 3) présentent une structure réalisée au moyen de matériels et/ou de logiciels.

4. Système selon l'une quelconque des revendications précédentes, dans lequel un signal de déclenchement est généré à l'aide du moyen de déclenchement (17) à l'intérieur du module d'action (1, 2, 3) en fonction du résultat de l'analyse de signaux.

5. Système selon l'une quelconque des revendications précédentes, dans lequel l'analyse de signaux comprend une analyse d'enveloppe.

6. Système selon l'une quelconque des revendications précédentes, dans lequel il est prévu une interface (19) dans le module d'action (1, 2, 3), notamment destinée au moyen de déclenchement (17) selon l'une quelconque des revendications précédentes, pour la fourniture d'un événement se produisant à l'extérieur du module d'action (1, 2, 3).

7. Système selon l'une quelconque des revendications précédentes, dans lequel il est prévu une interface destinée à la fourniture en sortie d'un événement se produisant à l'intérieur du module d'action (1, 2, 3), en particulier d'un événement généré par le module de déclenchement (17) selon l'une quelconque des revendications précédentes.

8. Système selon l'une quelconque des revendications précédentes, dans lequel le module d'action (1, 2, 3) comprend un noyau fonctionnel (12) pouvant être configuré spécifiquement en fonction de l'action ayant accès au moyen de stockage de données (11).

9. Système selon l'une quelconque des revendications précédentes, dans lequel il est prévu un moyen destiné à gérer et à coordonner entre eux une pluralité de modules d'action (1, 2, 3).

10. Système selon l'une quelconque des revendications précédentes, dans lequel il est prévu au moins un moyen (4) destiné à visualiser des données communiquées entre au moins deux modules d'action (1, 2, 3) ou entre un module d'action (1, 2, 3) et un composant système supplémentaire (4, 10, 12, 20, 30).

11. Système selon l'une quelconque des revendications précédentes, dans lequel le moyen de surveillance de processus est réalisé au moyen d'un dispositif de traitement de données et traite en particulier ces dernières au moyen d'une architecture du type client-serveur en réseau ou d'une architecture à base de messages.

12. Système selon la revendication 11, dans lequel la structure interne du module d'action (1, 2, 3) et la fonction sont définies au moyen des attributs et des méthodes d'une définition de classe au sens de la programmation orientée objet, dans lequel un module d'action (1, 2, 3) est lui-même généré en tant qu'instance de la classe pendant le temps d'exécution d'un programme informatique s'exécutant sur le dispositif de traitement de données, par ledit programme informatique.

13. Système selon la revendication 12, dans lequel le programme informatique comprend des instances de la classe qui communiquent les unes avec les autres.

14. Système selon la revendication 13, dans lequel il est prévu un cadre à base de logiciel qui coordonne l'exécution du programme.

15. Système selon l'une quelconque des revendications 11 à 14, dans lequel le module d'action (1, 2, 3) reçoit des données de mesure de transducteurs de données de mesure reliés au dispositif de traitement de données.

16. Système selon l'une quelconque des revendications 11 à 15, dans lequel un module d'action (1, 2, 3) est réalisé sous la forme d'un processus partiel d'un dispositif de traitement de données.

17. Système selon la revendication 16, dans lequel les processus partiels s'exécutent sur un composant ou des composants différents du dispositif de traitement de données.

18. Dispositif ou machine hydraulique comportant un système de surveillance de processus selon l'une quelconque des revendications précédentes.

19. Dispositif ou machine électrique, et plus particulièrement, système de commande ou système d'automatisation, comportant un système de surveillance de processus selon l'une quelconque des revendications 1 à 18.

20. Dispositif ou machine selon l'une quelconque des revendications 18 ou 19, dans lequel la surveillance de processus est au moins en partie réalisée sous la forme d'une surveillance de température et/ou de bruit d'impact et/ou de vibrations.

21. Parc de machines comportant des dispositifs ou des machines selon l'une quelconque des revendications 18 à 20 précédentes.
